# EUROPÄISCHE PATENTANMELDUNG

(11) **EP 3 159 213 A1**
(43) Veröffentlichungstag der Anmeldung: **26.04.2017**
(21) Anmeldenummer: 16193179.5
(22) Anmeldetag: 11.10.2016
(51) Int. Cl.: B60P 7/08, B60P 7/12, B60P 7/13, B60P 7/15

(54) **TRANSPORTFAHRZEUG MIT MINDESTENS ZWEI AUF DEM TRANSPORTFAHRZEUG BEFINDLICHEN CONTAINERN SOWIE VERFAHREN ZUM VERLADEN VON CONTAINERN**

(30) Priorität: 20.10.2015 DE 102015117844
(71) Anmelder: Zentis Logistik Service GmbH, 52070 Aachen (DE)
(72) Erfinder: Biermeier, Andreas, 52159 Roetgen (DE); Heinrichs, Josef, 52222 Stolberg (DE)
(74) Vertreter: Pellengahr, Maximilian Rudolf

(57) **Zusammenfassung**

Die vorliegende Erfindung betrifft ein Transportfahrzeug, insbesondere einen Lastkraftwagen, mit mindestens zwei auf dem Transportfahrzeug befindlichen Containern (1), das Transportfahrzeug umfassend eine horizontale Ladefläche (2), die sich entlang einer Längsachse (3) des Transportfahrzeugs erstreckt und auf der die Container (1) zumindest mittelbar aufstehen, wobei die Container (1) mittels mindestens einer Sicherungsvorrichtung (4) auf der Ladefläche (2) gesichert sind, sodass sowohl ein Kippen als auch ein Rutschen der Container (1) relativ zu Ladefläche (2) unterbunden ist, wobei mindestens zwei Container (1) parallel zu der Längsachse (3) des Transportfahrzeugs betrachtet hintereinander auf der Ladefläche (2) aufgestellt sind, wobei die Sicherungsvorrichtung (4) mindestens ein Kopplungsmittel (5) umfasst, mittels dessen mindestens zwei hintereinander aufgestellte Container (1) derart gekoppelt sind, dass diese eine Einheit (6) bilden, sodass ein Kippen jedes gekoppelten Containers (1) infolge von Beschleunigungen während einer Fahrt des Transportfahrzeugs zumindest um eine Querachse (7) des Transportfahrzeugs unterbunden ist, wobei die Sicherungsvorrichtung (4) mindestens ein Antirutschmittel (8) umfasst, mittels dessen die Einheit (6) gegen das Rutschen gesichert ist.

Um ein Sicherungskonzept zur Verfügung zu stellen, dass zumindest im Wesentlichen unabhängig von einem jeweiligen Transportfahrzeug bzw. von dessen Ausbildung des Laderaums einsetzbar ist, wird erfindungsgemäß vorgeschlagen, dass bei Vorliegen der Einheit (6) in einer Sicherungsposition, in der sie mittels der Sicherungsvorrichtung (4) gesichert ist, eine zwischen der Einheit (6) und der Ladefläche (2) des Transportfahrzeugs wirkende Normalkraft zumindest im Wesentlichen einer Gewichtskraft der Einheit (6) entspricht, wobei die Sicherungsvorrichtung (4) mindestens ein Haftmittel aufweist, das zumindest mittelbar mit der Einheit (6) zusammenwirkt und unmittelbar mit der Ladefläche (2) in Kontakt steht.

## Beschreibung

### Einleitung

Die vorliegende Erfindung betrifft ein Transportfahrzeug, insbesondere einen Lastkraftwagen, mit mindestens zwei auf dem Transportfahrzeug befindlichen Containern, das Transportfahrzeug umfassend eine horizontale Ladefläche, die sich entlang einer Längsachse des Transportfahrzeugs erstreckt und auf der die Container zumindest mittelbar aufstehen, wobei die Container mittels mindestens einer Sicherungsvorrichtung auf der Ladefläche gesichert sind, sodass sowohl ein Kippen als auch ein Rutschen der Container relativ zu Ladefläche unterbunden ist, wobei mindestens zwei Container parallel zu der Längsachse des Transportfahrzeugs betrachtet hintereinander auf der Ladefläche aufgestellt sind, wobei die Sicherungsvorrichtung mindestens ein Kopplungsmittel umfasst, mittels dessen mindestens zwei hintereinander aufgestellte Container derart gekoppelt sind, dass diese eine Einheit bilden, sodass ein Kippen jedes gekoppelten Containers infolge von Beschleunigungen während einer Fahrt des Transportfahrzeugs zumindest um eine Querachse des Transportfahrzeugs unterbunden ist, wobei die Sicherungsvorrichtung mindestens ein Antirutschmittel umfasst, mittels dessen die Einheit gegen das Rutschen gesichert ist.

Unter einem "Container" sind im Sinne der vorliegenden Anmeldung Ladungsgegenstände zu verstehen, die dazu geeignet sind, eine Ladung aufzunehmen. Insbesondere kann es sich bei solchen Containern um Behälter handeln, die zur Aufnahme von Flüssigkeiten geeignet sind. Die Geometrie und konkrete Ausgestaltung eines Containers ist für die vorliegende Anmeldung grundsätzlich unerheblich.

Eine "Sicherungsvorrichtung" ist gemäß der vorliegenden Anmeldung dazu geeignet, eine Ladung eines Transportfahrzeugs zu sichern. Die Sicherung findet dabei insoweit statt, wie entsprechende Regularien, denen das Transportfahrzeug genügen muss, es verlangen. Diese Regularien betreffen insbesondere Bestimmungen zur Ladungssicherung gegen Betriebskräfte, die infolge von Beschleunigungen während einer Fahrt des Transportfahrzeugs auftreten. Hierbei sind insbesondere Beschleunigungen infolge eines Anfahrens des Transportfahrzeugs sowie einer Bremsung desselben zu verstehen. Ferner muss eine mittels einer Sicherungsvorrichtung gesicherte Ladung gegen seitliche Beschleunigung, beispielsweise infolge von Kurvenfahrten, gesichert sein. Die Bildung einer Einheit kann insbesondere auch umfassen, dass die einzelnen zu der Einheit gekoppelten Container durch die Koppelung daran gehindert sind, sich relativ zueinander zu bewegen, insbesondere gegeneinander zu verkippen.

Ein Aufstellen von Containern "hintereinander" ist im Sinne der vorliegenden Anmeldung nicht auf ein exaktes Hintereinanderstehen der Container eingeschränkt zu verstehen. Stattdessen ist es vielmehr entscheidend, dass ein Schwerpunkt eines Containers nicht seitlich über einen jeweilig benachbarten, vor oder hinter dem ersten Container stehenden Container hervorragt. Letzteres würde die Bildung eines Drehmomentes des ausmittig stehenden Containers um den benachbarten Container infolge axial wirkender Kräfte bedeuten, was zu vermeiden ist.

Ein "Antirutschmittel" dient im Sinne der vorliegenden Anmeldung dazu, ein Rutschen der von den gekoppelten Containern gebildeten Einheit zu unterbinden. Dies kann grundsätzlich sowohl mittels einer kraftschlüssigen als auch mittels einer formschlüssigen oder einer sonstigen Verbindung erfolgen.

### Stand der Technik

Transportfahrzeuge mit darauf gelagerten Containern sind im Stand der Technik bereits seit geraumer Zeit bekannt. Insbesondere in Wirtschafszweigen, in denen Güter mittels Lastkraftwagen auf Straßen transportiert werden, sind Container im Allgemeinen sowie deren Sicherung im Speziellen von besonderer Bedeutung.

Bereits bekannte Sicherungsverfahren sind in aller Regel darauf gestützt, einen oder mehrere Container mittels Zugmitteln auf der Ladefläche des Transportfahrzeugs zu verspannen. Die Idee hinter dieser Art der Ladungssicherung besteht zum einen darin, Kräfte auf die Container auszuüben, sodass sie sich trotz der Einwirkung externer Kräfte, insbesondere solcher infolge von Beschleunigungen während der Fahrt des jeweiligen Transportfahrzeugs, nicht bewegen können. Dies kann sowohl eine horizontale als auch eine vertikale Sicherung der Container betreffen. Um das Rutschen der Container zu verhindern werden selbige typischerweise zudem auf die Ladefläche des Transportfahrzeugs niedergezurrt, sodass eine Normalkraft, die zwischen dem jeweiligen Container und der Ladefläche wirkt, erhöht wird. Die Erhöhung dieser Normalkraft führt dazu, dass eine sich zwischen der Ladefläche und dem Container einstellende Haftreibung proportional zur Erhöhung der Normalkraft gesteigert wird. Die gesteigerte Haftreibung unterdrückt das genannte Rutschen.

Eine typische Ausführung einer Sicherung, bei der mindestens zwei Container in Längsrichtung des Transportfahrzeugs hintereinander positioniert sowie miteinander gekoppelt werden, ist beispielsweise dem deutschen Gebrauchsmuster DE 90 14 863 zu entnehmen. Dieses zeigt ein Lagerelement, das auf der Ladefläche eines Transportfahrzeugs positioniert ist. Die zu sichernden Container sind wiederum auf diesem Lagerelement angeordnet und mittels eines netzartigen Kopplungsmittels umschlungen. Horizontal umlaufend um die Container ist ein Gurt gespannt, der die Container in horizontale Richtung miteinander koppelt. Das netzartige Kopplungsmittel ist in dafür vorgesehenen Vertiefungen der Ladefläche des Transportfahrzeugs verankert, wobei eine vertikale Kraft auf die von den Containern gebildete Einheit ausgeübt wird.

Ein Kippen der gebildeten Einheit infolge von Betriebskräften erscheint wegen der großen Aufstandsfläche der gebildeten Einheit bei gleichzeitig vergleichsweise niedrigem Schwerpunkt kaum möglich. Ferner ist ein Verrutschen der Einheit aufgrund der erhöhten Normalkraft zwischen dem Lagerelement und der Ladefläche des Transportfahrzeugs verhindert.

Weiterhin ist dem deutschen Gebrauchsmuster DE 20 2005 014 236 U1 eine Sicherung zu entnehmen, bei der eine Vielzahl von Boxen auf einer Ladefläche gesichert wird. Diese Boxen werden mittels eines netzartigen Kopplungsmittels zusammengefasst, wobei das Kopplungsmittel über die von den Boxen gebildete Einheit geführt wird. Das Kopplungsmittel wird auf der Ladefläche des Transportfahrzeugs verankert, sodass eine vertikale, in Richtung der Ladefläche wirkende Kraft erzeugt wird.

Die bekannten, mit Containern bestückten Transportfahrzeuge haben den Nachteil, dass zur Sicherung der jeweiligen Container der Laderaum des Transportfahrzeugs mit speziellen, geeigneten Vorrichtungen ausgestattet sein muss. Dies betrifft insbesondere das Vorhandensein von Schienen, Haken, Ösen, Nuten und dergleichen mehr. Mithin ist es in aller Regel nicht möglich, eine bestimmte Sicherungsvorrichtung mit einem beliebigen Transportfahrzeug, insbesondere einem beliebigen Auflieger eines Lastkraftwagens, zu kombinieren. Stattdessen ist in jedem Fall darauf zu achten, dass das gewählte Sicherungskonzept mit dem jeweilig zur Verfügung stehenden Transportfahrzeug kompatibel ist.

### Aufgabe

Der vorliegenden Erfindung liegt daher die Aufgabe zugrunde, ein Sicherungskonzept zur Verfügung zu stellen, dass zumindest im Wesentlichen unabhängig von einem jeweiligen Transportfahrzeug bzw. von dessen Ausbildung des Laderaums einsetzbar ist.

### Lösung

Die zugrunde liegende Aufgabe wird ausgehend von einem Transportfahrzeug der eingangs beschriebenen Art erfindungsgemäß dadurch gelöst, dass die Sicherungsvorrichtung, insbesondere das Antirutschmittel, mindestens ein Haftmittel aufweist, das zumindest mittelbar mit der Einheit zusammenwirkt und unmittelbar mit der Ladefläche in Kontakt steht. Dieses Haftmittel erlaubt es, dass bei Vorliegen der Einheit in ihrer Sicherungsposition, in der sie mittels der Sicherungsvorrichtung gesichert ist, eine zwischen der Einheit und der Ladefläche wirkende Normalkraft nicht künstlich erhöht werden muss, das heißt zumindest im Wesentlichen einer Gewichtskraft der Einheit entspricht.

Die von den Containern gebildete Einheit gilt im Sinne der vorliegenden Anmeldung dann als "gesichert", wenn Kippbewegungen um linear unabhängige, horizontale Achsen sowie das Rutschen der Einheit unterbunden sind.

Ein "Haftmittel" kann im Sinne der vorliegenden Anmeldung jede Art von Mittel beschreiben, das dazu geeignet ist, zumindest eine Haftreibung, vorzugsweise ferner eine Gleitreibung, zwischen den jeweilig betroffenen Reibflächen zu erhöhen. Um dies zu erreichen, kommt als Haftmittel insbesondere eine Antirutschbeschichtung oder dergleichen infrage. Alternativ ist es jedoch ebenso denkbar, dass eine Erhöhung der Haftreibung allein durch eine spezielle Oberflächenstruktur einer beteiligten Reibfläche erreicht wird, die an der Sicherungsvorrichtung ausgebildet wird. Das Haftmittel kann im Sinne des Anspruchs 1 gleichzeitig das Antirutschmittel darstellen und umgekehrt.

Das erfindungsgemäße Transportfahrzeug hat viele Vorteile. Insbesondere ist es zur Sicherung der Container nicht länger notwendig, diese mit zugehörigen Elementen des Laderaums des Transportfahrzeugs zu verbinden. Vor allem entfällt die Notwendigkeit, die Container oder die Einheit an speziellen Stellen des Laderaums zu befestigen und auf diese Weise eine kraftübertragende Verbindung zwischen der Ladefläche, den seitlichen Wänden oder sonstigen Teilen des Laderaums und der Einheit bzw. den Containern herzustellen. Hierdurch ist die Möglichkeit geschaffen, die Container unabhängig von einem jeweils zur Verfügung stehenden Transportfahrzeug auf der Ladefläche desselben zu sichern.

Hierbei ist es wesentlich, dass mindestens zwei Container mittels des Kopplungsmittels zu der Einheit verbunden sind, da nur auf diese Weise eine Sicherung der Container gegen ein Kippen um die Querachse des Transportfahrzeugs verhindert werden kann. Dem liegt die Überlegung zugrunde, dass die Koppelung mehrerer Container aneinander zu einer Verschiebung des Schwerpunktes führt, und zwar insoweit, als der Schwerpunkt eines einzelnen Containers von einer äußeren Kippkante des jeweiligen Containers weniger weit entfernt ist als ein Schwerpunkt einer von mehreren Containern gebildeten Einheit von deren Kippkante. Mit anderen Worten wird durch die Verbindung mehrerer Container zu einer Einheit die Grundfläche erhöht, sodass ein Hebelarm zwischen einer jeweiligen Kippkante und dem Schwerpunkt der Einheit vergrößert wird. Es versteht sich, dass hierdurch ein mittels der Gewichtskraft der Einheit erzeugtes Haltemoment, das den infolge von Betriebskräften wirkenden Kippmoment entgegenwirkt, gleichermaßen vergrößert wird und auf diese Weise ein Kippen der Einheit verhindert.

Die beschriebene Sicherungsvorrichtung ist insbesondere für solche Container besonders vorteilhaft, deren Schwerpunkt oberhalb von einem Viertel ihrer Höhe, insbesondere oberhalb ihrer halben Höhe, liegt. Weiterhin ist die Sicherungsvorrichtung für solche Container besonders von Vorteil deren parallel zu der Längsachse des Transportfahrzeugs gemessener Abstand zwischen maximal in Längsrichtung des Transportfahrzeugs voneinander beabstandeter Aufstandspunkte kleiner ist als eine Höhe des jeweiligen Containers, insbesondere kleiner als dessen halbe Höhe.

Das erfindungsgemäße Transportfahrzeug ist dann besonders vorteilhaft, wenn die Einheit bei Vorliegen in ihrer Sicherungsposition und bei Stillstand des Transportfahrzeugs frei von horizontalen Kräften ist. Mit anderen Worten ist ein solches Transportfahrzeug vorteilhaft, bei dem eine seitliche Verspannung der Einheit zur Sicherung derselben nicht notwendig ist. Dies betrifft insbesondere die Freiheit von horizontalen Zugkräften mittels derer die Einheit in Richtung einer seitlichen Wand des Transportfahrzeugs gezogen wird. Derartige Zugkräfte werden im Stand der Technik typischerweise mittels Spanngurten erzeugt.

Vorteilhafterweise ist das Antirutschmittel von mindestens einem Lagerelement gebildet, auf dem mindestens zwei Container einer Einheit zumindest mittelbar aufstehen und das auf der Ladefläche des Transportfahrzeugs aufliegt. Dabei versteht es sich, dass eine der Ladefläche zugewandte Unterseite des beschriebenen Lagerelements das Haftmittel aufweisen muss, damit letzteres zwischen dem Lagerelement und der Ladefläche des Transportfahrzeugs wirken kann. Das Lagerelement kann beispielsweise von einer Platte gebildet sein, die unterhalb der gekoppelten Container positioniert ist. Insbesondere können die Container auf der Platte abgestellt werden, entweder bevor oder nachdem sie mittels des Kopplungsmittels zu der Einheit verbunden werden. Vorteilhafterweise umfasst die Sicherungsvorrichtung zwei Lagerelemente, die von zwei lang gestreckten Schienen gebildet sind, die sich beispielsweise parallel zueinander entlang seitlicher Außenkanten der jeweiligen Container erstrecken.

In einer besonders vorteilhaften Ausgestaltung des erfindungsgemäßen Transportfahrzeugs umfasst das mindestens eine Lagerelement sowohl das Antirutschmittel als auch das Kopplungsmittel und vereint somit zwei Funktionen in einem funktionalen Element. Eine entsprechende Ausführung, bei der zwei Lagerelemente vorhanden sind, die von zwei Schienen gebildet sind, ist dem Ausführungsbeispiel entnehmbar. Der grundsätzliche Gedanke der Zusammenführung sowohl der Kopplungsfunktion als auch der Antirutschfunktion besteht darin, dass das Kopplungsmittel nicht notwendigerweise von einem die Container umschlingenden Gurt oder Netz gebildet sein muss sondern ebenso einen bodennahes Element aufweisen kann, auf dem die zu koppelnden Container gemeinsam aufstehen.

Bei Verwendung eines Lagerelements als Kopplungsmittel sind die miteinander gekoppelten Container vorteilhafterweise jeweils mit dem Lagerelement in Kraft übertragender Weise verbunden, insbesondere jeweils mittels mindestens eines Zugmittels an dem Lagerelement verzurrt. Auf diese Weise können die einzelnen Container in Kraft übertragender Weise mit dem Lagerelement verbunden werden, wobei das Lagerelement als solches die Verbindung der Container untereinander herstellt. In Kombination kann somit auf besonders einfache Weise das Lagerelement zur Koppelung der Container verwendet werden, ohne dass es hierzu einer kraftübertragenden Verbindung der Container als solcher mit dem Transportfahrzeug bedarf.

Das erfindungsgemäße Transportfahrzeug weiter ausgestaltend umfasst die Sicherungsvorrichtung mindestens ein Stützelement, mittels dessen zumindest miteinander gekoppelte Container mittelbar und/oder unmittelbar gegen seitliche Wände des Transportfahrzeugs abstützbar sind. Eine derartige Abstützung hat den vorteilhaften Effekt, dass ein Kippen der Container bzw. der Einheit infolge von Beschleunigungen während der Fahrt des Transportfahrzeugs um dessen Längsachse unterbunden sind. Eine mittelbare Abstützung kann beispielsweise darin bestehen, dass benachbarte Container bzw. benachbarte Einheiten von Containern gegeneinander abgestützt sind, beispielsweise mittels eines Pufferelements. Eine unmittelbare Abstützung wird hingegen mittels eines solchen Stützelements erreicht, dass die Einheit bzw. mindestens einen Container der Einheit direkt mit der seitlichen Wand des Transportfahrzeugs verbindet.

Ein beschriebenes Stützelement hat die Wirkung, horizontale, parallel zu der Querachse des Transportfahrzeugs wirkende Kräfte aufzunehmen und abzutragen. Dabei versteht es sich, dass ein Kippen einer Einheit bzw. eines Containers um die Längsachse des Transportfahrzeugs nur dann möglich ist, wenn eine parallel zu der Querachse wirkende Kraft ein ausreichend großes Kippmoment erzeugt, das ein durch die Gewichtskraft der Einheit bzw. des Containers bedingtes Haltemoment übersteigt. Durch die Abstützung gegen die seitlichen Wände des Transportfahrzeugs werden derartige horizontale Kräfte unmittelbar abgeführt, sodass diese nicht an einer jeweiligen Einheit frei werden und folglich kein Kippmoment erzeugen können.

Die Abstützung mittels eines oder mehrerer Stützelemente erfolgt dabei ausschließlich mittels der Übertragung von Druckkräften; eine Übertragung von Zugkräften erscheint nicht erforderlich, ist gleichwohl grundsätzlich vorstellbar. Dies hat den besonderen Vorteil, dass eine Fixierung einer Einheit und/oder eines Containers in dem Laderaum des Transportfahrzeugs mittels Zugmitteln oder dergleichen entfallen kann. Demzufolge ist es nicht notwendig, dass der Laderaum entsprechende Anschlusspunkte, Anschlussschienen oder dergleichen aufweist. Die vorteilhafte Flexibilität der Sicherungsvorrichtung im Hinblick auf die Möglichkeit zur Kombination mit verschiedenen Transportfahrzeugen ist bei Verwendung genannter Stützelemente folglich gewahrt.

In einer vorteilhaften Ausgestaltung des Transportfahrzeugs, das mindestens ein Stützelement gemäß der vorstehenden Beschreibung aufweist, ist es vorteilhaft, wenn zumindest ein Stützelement oberhalb von einem Schwerpunkt einer jeweilig gestützten Einheit bzw. oberhalb von Schwerpunkten der gestützten Container angeordnet ist. Vorzugsweise ist das Stützelement dazu geeignet, bei Vorliegen der Einheit in ihrer Sicherungsposition zumindest zeitweise eine unmittelbare Verbindung zwischen mindestens einem der gekoppelten Container und einer seitlichen Wand des Transportfahrzeugs herzustellen. Die Anordnung des Stützelement bzw. vorteilhafterweise sämtlicher Stützelemente oberhalb der jeweiligen Schwerpunkte hat den Vorteil, dass die auf die Stützelemente und sodann auf die seitlichen Wände des Transportfahrzeugs übertragenen Kräfte vergleichsweise gering sind, da der Hebearm zwischen einer Angriffsstelle des jeweiligen Stützelements und einer Kippachse der jeweiligen Einheit größer ist als der Hebelarm zwischen dem Schwerpunkt der Einheit und der Kippachse.

Vorzugsweise erstreckt sich das mindestens eine Stützelement, insbesondere sämtliche Stützelemente, parallel zu der Längsachse des Transportfahrzeugs und folglich parallel zu einer jeweilig abgestürzten Einheit aus Containern. Vorzugsweise erstreckt sich ein Stützelement mindestens über eine gesamte Länge einer Einheit, sodass eine Krafteinleitung ausgehend von der Einheit in die seitlichen Wand des Containers bzw. in eine benachbarte Einheit von Containern möglichst gleichmäßig verteilt über eine große Fläche stattfinden kann und dadurch auf die seitliche Wand einwirkende Lastspitzen vermieden werden.

Unabhängig von der sonstigen Ausgestaltung des erfindungsgemäßen Transportfahrzeugs ist es besonders vorteilhaft, wenn selbiges mindestens zwei parallel zu der Querachse des Transportfahrzeugs verlaufende Verbindungselemente aufweist. Diese Verbindungselemente erstrecken sich zwischen den seitlichen Wänden des Transportfahrzeugs und sind in Längsrichtung desselben hintereinander sowie in einem zu der Ladefläche senkrecht gemessenen Abstand von der Ladefläche angeordnet. Bei derartigen Verbindungselementen kann es sich insbesondere um balkenförmige, lang gestreckte Teile handeln, die in Kraft übertragender Weise mit beiden sich gegenüberliegenden seitlichen Wänden des Transportfahrzeugs verbunden sind.

Vorteilhafterweise sind die Verbindungselemente oberhalb der Schwerpunkte der Einheit angeordnet. Hierbei kann es besonders von Vorteil sein, wenn mindestens ein Verbindungselement derart relativ zu einer Einheit positioniert ist, dass es zwischen den hintereinander aufgestellten Containern der Einheit hindurch verläuft. Mit anderen Worten erstreckt sich ein solches Verbindungselement zwischen den Containern ein und derselben Einheit.

Die letztgenannte Ausführung hat den Vorteil, dass ein solches Verbindungselement besonders gut dazu geeignet ist, seitliche Stützelemente, die zur seitlichen Abstützung einer Einheit genutzt werden, aufzunehmen und auf diese Weise in vertikaler Richtung in dem Laderaum zu lagern. Bei einer solchen Ausführung liegen die Stützelemente folglich auf mindestens zwei Verbindungselementen auf, sodass die Stützelemente nicht "herunterfallen". Vorzugsweise sind die Stützelemente bei einer derartigen Ausführung in Kraft übertragender Weise an den Verbindungselementen verbunden, sodass eine relative Bewegung beider Teile zueinander blockiert ist. Eine solche Verbindung kann beispielsweise mittels Kabelbindern erfolgen.

Doch auch unabhängig von den Stützelementen sind die Verbindungselemente als solche vorteilhaft. Dies liegt darin begründet, dass sie eine Kraftübertragung zwischen den seitlichen Wänden des Transportfahrzeugs ermöglichen. Die seitlichen Wände können somit in statischer Hinsicht zumindest in horizontale Richtung betrachtet als Einheit wirken, was insbesondere im Hinblick auf eine Einleitung horizontaler Kräfte in die seitlichen Wände von Vorteil sein kann. Die seitlichen Wände eines Transportfahrzeugs sind nämlich in aller Regel nicht primär zur Ableitung horizontaler Kräfte geeignet, sodass eine gegenseitige Verstärkung von Vorteil sein kann.

In einer typischen Ausgestaltung des erfindungsgemäßen Transportfahrzeugs weisen die Container jeweils ein Untergestell auf, das mindestens vier Standbeine umfasst. Derartige Container kommen insbesondere zum Transport von Flüssigkeiten zum Einsatz. Das Untergestell hat den Vorteil, dass es eine Höhe des die Flüssigkeit speichernden Behälters von einem jeweiligen Untergrund abhebt und dadurch die Möglichkeit schafft, einen unteren Auslass unterhalb des Behälters zu installieren. Die mittels des Containers gelagerte Flüssigkeit kann mittels eines derartigen Auslasses besonders einfach aus dem Container abgeführt werden. Das Untergestell schafft folglich sozusagen einen Raum für einen unteren Auslass des Behälters.

Bei Verwendung derartiger Container ist es von besonderem Vorteil, wenn die Sicherungsvorrichtung mindestens zwei parallel zueinander angeordnete Schienen umfasst, die jeweils ein Lagerelement bilden. Die Schienen weisen eine lang gestreckte Form auf, sodass hintereinander stehende Container, die mittels eines Kopplungsmittels zu einer Einheit verbunden sind, jeweils mit zwei Standbeinen auf einer der beiden Schienen aufstehen. Diese Schienen stellen sodann den Kontakt zwischen den Containern bzw. den Standbeinen der Container und der Ladefläche des Transportfahrzeugs her, wobei eine Unterseite einer jeweiligen Schiene das Haftmittel aufweist.

Analog zu vorstehender Beschreibung ist es besonders vorteilhaft, wenn die Schienen gleichzeitig das Kopplungsmittel der Sicherungsvorrichtung bilden, das heißt für die Kopplung der zu der Einheit verbundenen Container verantwortlich sind. In diesem Fall erfüllen die Schienen eine Doppelfunktion: zum einen wirken sie als Antirutschmittel, zum anderen als Kopplungsmittel.

Vorzugsweise sind die vorstehend beschriebenen Schienen bei Vorliegen der Einheit in ihrer Sicherungsposition parallel zu der Längsachse des Transportfahrzeugs ausgerichtet. Auf diese Weise sind die Schienen besonders gut geeignet, um die Querachse des Transportfahrzeugs wirkende Biegemomente abzutragen.

Um die Schienen besonders einfach als Kopplungsmittel verwenden zu können, ist es von Vorteil, wenn die jeweiligen Container der jeweilig gebildeten Einheit in Kraft übertragender Weise mit den Schienen verbunden sind, insbesondere mittels Zugmitteln. Derartige Zugmittel können beispielsweise von Spanngurten gebildet sein, die mit entsprechenden Ösen an den Schienen sowie zugehörigen Befestigungsstellen an den Containern zusammenwirken und durch einfaches Anspannen aktiviert werden können. Mittels einer Verbindung der einzelnen Container mit den Schienen sind die Container jeweils für sich allein betrachtet mit den Schienen verbunden und folglich die Container untereinander mittels der Schienen zu einer Einheit verbunden. Die Schienen wirken folglich als das Kopplungsmittel im Sinne des Anspruchs 1.

Eine Sicherung einer mittels derartiger Schienen gelagerten Einheit gegen das Rutschen erfolgt mittels des beschriebenen Haftmittels. Ergänzend ist es von Bedeutung, dass die Container, die auf den Schienen aufstehen, gegen ein Rutschen relativ zu den Schienen gesichert sind. Dies kann beispielsweise mittels einer zwischen den Standbeinen der Container und den Schienen wirkenden Reibkraft erfolgen. Diese kann insbesondere dann ausreichend sein, wenn die Container auf die Schienen niedergezurrt sind, sodass eine zwischen den Containern und den Schienen wirkende Normalkraft erhöht ist. Ergänzend oder alternativ ist es ebenso denkbar, dass die Schienen auf einer von der Ladefläche abgewandten Oberseite mindestens eine senkrecht zu der Oberseite aufragende Stoßkante aufweisen, die dazu geeignet ist, mit einem jeweiligen Standbein eines Containers einen Formschluss auszubilden. Eine derartige Stoßkante verhindert eine Bewegung des jeweilig gesicherten Standbeins in einer zu der Oberseite der Schiene parallelen Ebene. Ein Rutschen des Standbeins ist folglich blockiert.

Ebenso ist es denkbar, dass die Standbeine an einer unteren Aufstandsfläche, mit der sie auf einem Untergrund aufstehen, mit einem Haftmittel beaufschlagt sind, das einen Reibungskoeffizienten zwischen der Aufstandsfläche und der jeweiligen Partnerfläche erhöht. Es versteht sich, dass eine derartige Ausführung sowohl ergänzend als auch alternativ möglich ist.

In einer weiterhin vorteilhaften Ausgestaltung der beschriebenen Schienen sind selbige in Form von L-Profilen ausgebildet. Ein derartiges Profil durch einen abgewinkelten Schenkel gekennzeichnet, der sich ausgehend von einem flächigen Bereich der jeweiligen Schiene typischerweise senkrecht erstreckt. Dieser aufragende Schenkel trägt dazu bei, eine Steifigkeit der jeweiligen Schiene zu erhöhen und diese somit gegen ein Verwinden infolge eines wirkenden Biegemoments zu schützen. Im statischen Sinne wird durch die Ausführung einer Schiene als L-Profil ihr Widerstandsmoment erhöht.

Alternativ zu der hier ausgeführten Variante der Sicherungsvorrichtung des erfindungsgemäßen Transportfahrzeugs in Form parallel zueinander verlaufen der Schienen, die sowohl als Kopplungsmittel als auch als Antirutschmittel wirken, sind beliebige andere Kombinationen denkbar. Insbesondere könnte das Kopplungsmittel beispielsweise von einem die zu koppelnd Container umlaufenden Zuggurt gebildet sein, der eine relative Bewegung der Container zueinander unterbindet. Ein derartiges Kopplungsmittel hat den statischen Effekt, dass ein Haltemoment, das die so gebildete Einheit gegen ein Kippen um die Querachse des Transportfahrzeugs sichert, deutlich vergrößert wird, da sich der Schwerpunkt der Einheit im Vergleich zu dem Schwerpunkt eines einzelnen Containers von der jeweilig relevanten Kippachse entfernt. Bei einer solchen Ausführung könnte das Antirutschmittel beispielsweise von speziellen Fußelementen gebildet sein, die als Lagerelemente der Sicherungsvorrichtung wirken. Insbesondere bei solchen Containern, die gemäß vorstehender Beschreibung ein Untergestell mit Standbeinen aufweisen, können derartige Fußelemente beispielsweise in Form von Schuhteilen gebildet sein, die jeweils an einem Standbein angeordnet werden können. Solche Schuhteile sind an ihren Unterseiten mit einem Haftmittel versehen, sodass ein Reibungskoeffizient zwischen den Schuhteilen und der Ladefläche des Transportfahrzeugs erhöht ist. Ein ergänzendes Niederzurren der Container bzw. der von den Containern gebildeten Einheit zur Erhöhung der Normalkraft zwischen der Einheit und der Ladefläche ist sodann nicht vonnöten.

Neben dem Vorteil der besonderen Flexibilität des erfindungsgemäßen Transportfahrzeugs im Hinblick auf die Sicherung etwaiger Container in dessen Laderaum bietet die vorliegende Erfindung einen weiteren besonderen Vorteil. Die Unabhängigkeit der Container von Sicherungspunkten oder Sicherungsstellen innerhalb des Laderaums des Transportfahrzeugs ermöglicht es nämlich, die Sicherung der Container bzw. deren Sicherungsvorrichtung bereits vollständig zu montieren, bevor die Container überhaupt verladen werden. Hierbei können mittels der Sicherungsvorrichtung mindestens zwei Container bereits außerhalb des Transportfahrzeugs miteinander gekoppelt werden und erst anschließend auf der Ladefläche des Transportfahrzeugs positioniert werden. Hierbei ist lediglich darauf zu achten, dass die sodann gebildete Einheit derart auf der Ladefläche positioniert wird, dass die gekoppelten Container relativ zu der Längsachse des Transportfahrzeugs hintereinander angeordnet sind.

Dieses spezielle Ladeverfahren, dass durch die erfindungsgemäße Sicherungsvorrichtung ermöglicht wird, führt zu einer deutlich zügigeren Beladung des jeweiligen Transportfahrzeugs mit den Containern, da pro Ladevorgang sämtliche Container einer gebildeten Einheit auf einmal auf der Ladefläche positioniert werden können. Sofern eine Einheit beispielsweise zwei Container umfasst, muss zur vollständigen Beladung des Laderaums lediglich die Hälfte der Ladevorgänge durchgeführt werden, die ansonsten für eine einzelne Verladung der Container notwendig gewesen wären. Die Verladung einer von mehreren Containern gebildeten Einheit bedarf womöglich einer speziellen Ladevorrichtung. Sofern eine solche Ladevorrichtung an dem Bestimmungsort der Container nicht vorhanden sein sollte, stellt dies gleichwohl keine Einschränkung dar, da die Container ohne weiteres auf der Ladefläche vereinzelt werden können und sodann einzeln von der Ladefläche abtransportierbar sind.

### Ausführungsbeispiele

Das erfindungsgemäße Transportfahrzeug ist nachfolgend anhand eines Ausführungsbeispiels, das in den Figuren dargestellt ist, näher erläutert. Es zeigen:
- Fig. 1:: Eine seitliche Ansicht einer von zwei Container gebildeten Einheit, die auf einer Ladefläche eines Transportfahrzeugs positioniert sind,
- Fig. 2:: Eine Draufsicht der Einheit gemäß Figur 1,
- Fig. 3:: Eine seitliche Ansicht zweier, nebeneinander positionierter Einheiten auf einer Ladefläche eines Transportfahrzeugs,
- Fig. 4:: Detail eines Stützelement zur Sicherung von Einheiten gegen ein Kippen um eine Längsachse des Transportfahrzeugs,
- Fig. 5:: Detail eines untergestellt eines Containers, dass auf Schienen einer Sicherungsvorrichtung aufsteht und
- Fig. 6:: Ein Detail einer Schiene der Sicherungsvorrichtung.

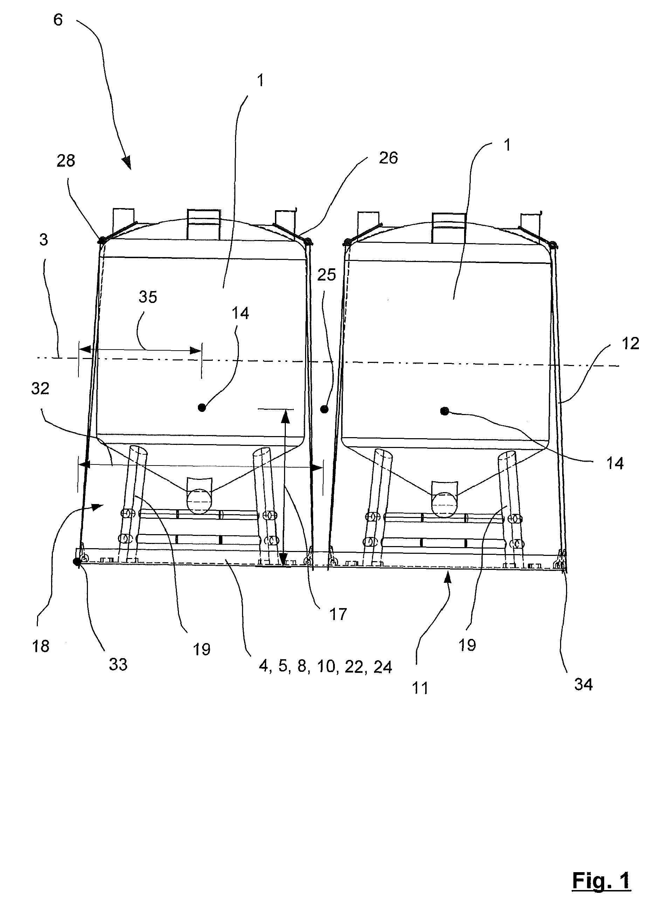

Das Ausführungsbeispiel, das in den **Figuren 1 bis 6** dargestellt ist, umfasst ein Transportfahrzeug, auf dem eine Mehrzahl von Einheiten **6** gelagert sind, wobei jede der Einheiten **6** jeweils zwei Container **1** umfasst. Die Container **1** sind mittels einer Sicherungsvorrichtung **4** auf einer Ladefläche **2** des Transportfahrzeugs gesichert, und zwar in einer solchen Weise, dass ein Kippen sowie ein Rutschen der Container **1** relativ zu der Ladefläche **2** des Transportfahrzeugs unterbunden ist.

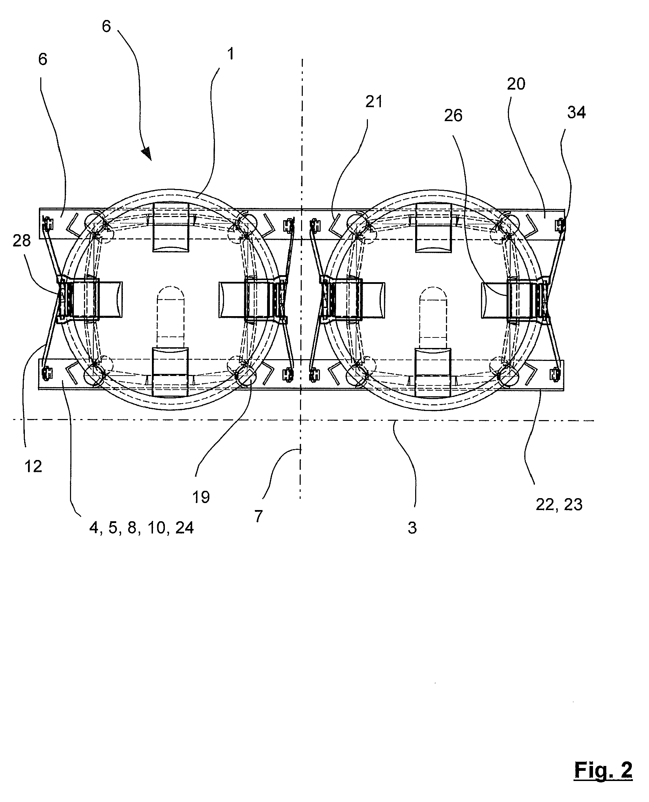

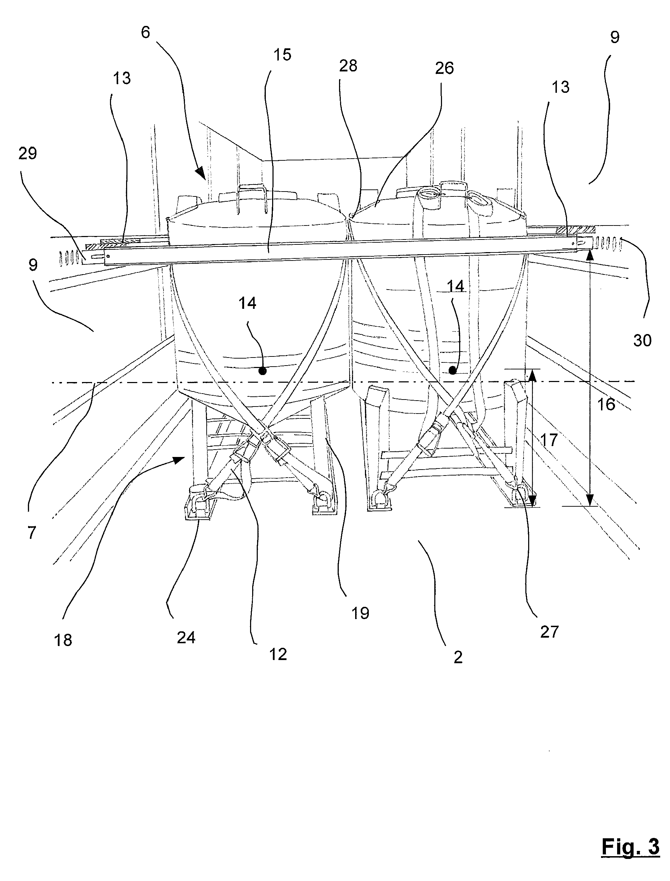

Die Container **1,** die zu einer Einheit **6** gekoppelt sind, sind relativ zu einer Längsachse **3** des Transportfahrzeugs betrachtet hintereinander angeordnet, wie sich insbesondere aus der Darstellung gemäß **Figur 3** ergibt. Die Container **1** sind hier jeweils einem Untergestell **18** ausgestattet, wobei jeweils ein Untergestell **18** insgesamt vier Standbeine **19** umfasst. Mit den Standbeinen **19** stehen die Container **1** auf Schienen **24** auf, die in der gezeigten Ausführung gewissermaßen das "Herzstück" der Sicherungsvorrichtung **4** bilden. Wie sich insbesondere aus den **Figuren 2****,** **3** **und** **5** ergibt, umfasst die Sicherungsvorrichtung **4** insgesamt zwei Schienen **24,** die parallel zueinander sowie parallel zu der Längsachse **3** des Transportfahrzeugs orientiert sind. Die Schienen **24** sind dabei derart relativ zu den Containern **1** ausgerichtet, dass letztere jeweils mit zwei ihrer Standbeine **19** auf einer der Schienen **24** aufstehen.

Die Schienen **24** bilden ein Lagerelement **10** der Sicherungsvorrichtung **4.** Sie wirken gleichermaßen als Antirutschmittel **8** sowie als Kopplungsmittel **5,** da die Schienen **24** zum einen die Aufgabe übernehmen, ein Rutschen der Einheit **6** relativ zu der Ladefläche **2** des Transportfahrzeugs zu unterbinden und zum anderen die beiden Container **1** der Einheit **6** miteinander koppeln. Die Kopplung der beiden Container **1** ist derart ausgeführt, dass ein Kippen der gesamten Einheit **6** um eine zu der Längsachse **3** senkrechte Querachse **7** des Transportfahrzeugs unterbunden ist. Hierbei versteht es sich, dass sowohl die beschriebenen Kippbewegungen um die Längsachse **3** bzw. die Querachse **7** als auch das Rutschen relativ zu der Ladefläche **2** jeweils in solchen Umfang unterbunden sind, dass diese allein aufgrund von Beschleunigungen, die während einer Fahrt des Transportfahrzeugs auftreten, blockiert sind. Hierbei ist es insbesondere von Bedeutung, dass eine Unterdrückung der beschriebenen Bewegungen bei Aufbringen einer genormten Beschleunigung wirkt und die Einheit **6** unter eben diesen Bedingungen standhaft bleibt.

Um ein Kippen der Einheit **6** um die Querachse **7** des Transportfahrzeugs zu verhindern, ist es erforderlich, das ein Haltemoment ein Kippmoment übersteigt, sodass die Einheit **6** nicht um eine zu der Querachse **7** parallele Kippachse **33** kippt. Bei Betrachtung von **Figur 1** könnte besagte Kippachse **33** beispielsweise am unteren linken Ende der dargestellten Schiene **24** verlaufen, wobei sie sich senkrecht zur Zeichenebene erstreckt. Bei der Bildung einer Summe aller Momente um die beschriebene Kippachse **33** wirkt eine Gewichtskraft der Einheit **6** in einem Schwerpunkt **25** der Einheit **6** mit einem Hebelarm **32.** Eine Störkraft, die insbesondere infolge einer Beschleunigung der Einheit **6** auf dem Transportfahrzeug auftreten kann, greift gleichfalls in dem Schwerpunkt **25** der Einheit an, wirkt jedoch in horizontale Richtung, beispielsweise - in **Figur 1** betrachtet - nach links, wobei ein Hebel dieser Störkraft einer senkrecht zur Ladefläche **2** gemessenen Höhe **17** des Schwerpunkts **25** entspricht.

Aus der Darstellung gemäß **Figur 1** ergibt sich unmittelbar, dass die Koppelung der beiden Container **1** zu der Einheit 6 das gebildete Momentengleichgewicht um die Kippachse **33** positiv beeinflusst, da der Schwerpunkt **25** der Einheit **6** gegenüber einem Schwerpunkt **14** eines einzelnen Containers **1** in einem größeren Abstand **32** von der Kippachse **33** angeordnet ist. Dieser Abstand **32** entspricht dem Hebelarm der wirkenden Gewichtskraft des Containers **1** bzw. der Einheit **6.** Der Schwerpunkt **14** ist in einem Abstand **35** zu der Kippachse **33** angeordnet, wobei der Abstand **35** lediglich die Hälfte des Abstands **32** beträgt. Das Haltemoment, dass die Einheit **6** vor dem Kippen um die Kippachse **33** bewahrt, ist demzufolge umso größer, desto weiter der Schwerpunkt der Einheit **6** von der Kippachse **33** entfernt ist. Die Koppelung der beiden Container **1** zu der Einheit **6** erzielt genau diesen Effekt und stellt somit eine Sicherung der Einheit **6** gegen ein Kippen um die Kippachse **33** dar.

Damit die beiden Container 1 mittels der Schienen **24** miteinander gekoppelt sind, sind die Container **1** jeweils mittels Zugmitteln **12** mit den Schienen **24** verspannt. Die Zugmittel **12** sind hier in Form von Spanngurten ausgeführt, die sowohl an einer Anschlussstelle **34** an den Schienen **24** als auch Kopplungselementen **26** an Oberseiten der Container **1** angreifen. Durch Wirkung der Zugmittel **12** werden die Container **1** jeweils auf die Schienen **24** niedergezurrt und auf diese Weise daran gehindert, sich von den Schienen **24,** das heißt von dem Kopplungsmittel **5,** zu trennen. Im Ergebnis sind folglich die beiden Container 1 durch Wirkung der Schienen **24** miteinander gekoppelt und bilden die Einheit **6.**

Bei der dargestellten Ausführung ist es besonders vorteilhaft, dass die Kopplungselemente **26** jeweils mit Umlenkrollen **28** ausgestattet sind. Diese Umlenkrollen **28** ermöglichen es, ein Zugmittel **12** ausgehend von einer Schiene **24** bzw. einer zugehörigen Anschlussstelle **34** nach oben zu dem zugehörigen Kopplungselement **26** und sodann zurück nach unten zu der gegenüberliegenden Schiene **24** zu führen. Die jeweilige Umlenkrolle **28** verringert einen Reibwiderstand des Zugmittels **12** an dem Lagerelement **26** so weit, dass ein Spannen des Zugmittels **12** ohne weiteres möglich ist.

Um das Rutschen der Einheit **6** relativ zu der Ladefläche **2** zu vermeiden, sind die Schienen **24** auf deren Unterseiten **11** jeweils mit einem Haftmittel versehen. Hierbei kann es sich insbesondere um eine Kunststoffbeschichtung handeln, die eine Haftreibung zwischen den Schienen **24** und der Ladefläche **2** erhöht. Das Haftmittel steht unmittelbar sowohl mit der Ladefläche **2** als auch mit den Schienen **24** in Kontakt. Die Schienen **24** bilden bei dem gezeigten Ausführungsbeispiel folglich nicht nur das Kopplungsmittel **5,** sondern auch das Antirutschmittel **8.**

Die Besonderheit der erfindungsgemäßen Sicherung der Container **1** besteht hierbei darin, dass eine zwischen den Schienen **24** und der Ladefläche **2** wirkende Normalkraft fast ausschließlich einer Summe der Gewichtskräfte der beiden Container **1,** das heißt einer Gewichtskraft der Einheit **6,** entspricht. Zu den genannten Gewichtskräften der Container **1** addieren sich lediglich die Gewichtskräfte der Schienen **24,** der Zugmittel **12** sowie der Kopplungselemente **26.** Dabei versteht sich, dass die Summe der Gewichtskräfte der letztgenannten Teile im Vergleich zu denen der Container **1** vernachlässigbar sind. Insbesondere wird die Einheit **6** nicht mittels weiterer Sicherungselemente, insbesondere mittels zusätzlicher Zugmittel, auf die Ladefläche **2** gezurrt, um die beschriebene Normalkraft künstlich zu erhöhen. Letzteres wird im Stand der Technik üblicherweise vorgenommen, um eine Haftreibung zwischen einem jeweiligen Ladungsgegenstand und der zugehörigen Ladefläche des Transportfahrzeugs zu erhöhen und somit das Rutschen des Ladungsgegenstands zu verhindern. Eine derartige Sicherung ist aufgrund des Antirutschmittels **8 ,** das mit dem Haftmittel ausgestattet ist, bei der erfindungsgemäßen Sicherung nicht notwendig. Alternativ ist es grundsätzlich ebenso die Sichtweise im Sinne des Anspruchs **1** denkbar, dass das Haftmittel das Antirutschmittel bildet.

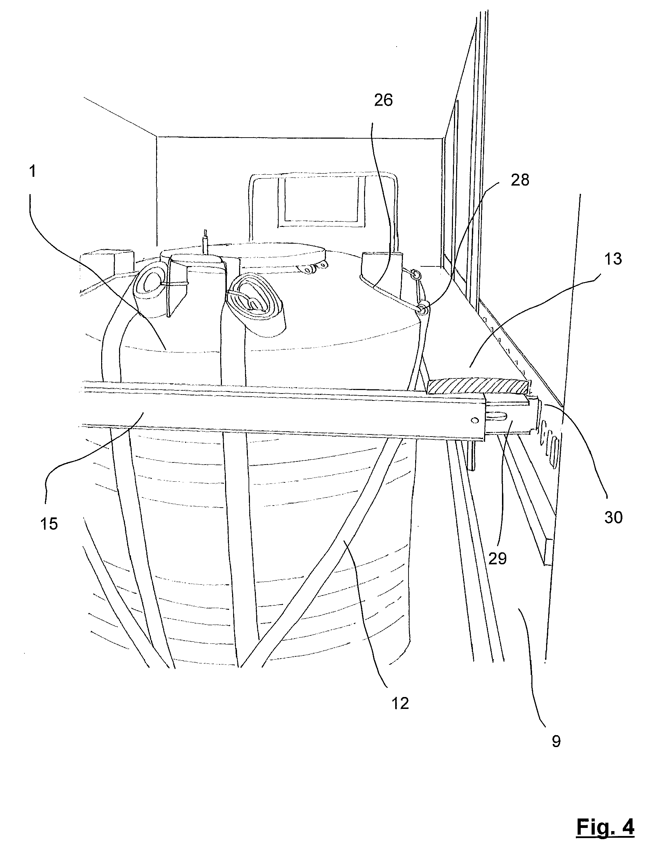

Zusätzlich zu den vorstehend erläuterten Mechanismen bezüglich der Verhinderung des Rutschens sowie des Kippens der Einheit **6** um die Querachse **7** ist zur vollständigen Sicherung der Einheit **6** ferner deren Kippen um die Längsachse **3** des Transportfahrzeugs zu verhindern. In dem gezeigten Beispiel wird diese Sicherung mittels Stützelementen **13** erzielt, die in einem Abstand **16** von der Ladefläche **2** angeordnet sind. Diese Stützmittel **13** sind besonders gut aus den **Figuren 3** **und** **4** ersichtlich. Sie sind hier in Form von Holzbohlen ausgeführt, die einen seitlichen Raum neben einer jeweiligen Einheit 6 ausfüllen, sodass eine horizontale, zur Querachse **7** parallele Bewegungsfreiheit der Einheit **6** eliminiert ist. Es versteht sich, dass zum Abfangen eines Kippmoments, dass um die Längsachse **3** wirkt, eine Abstützung einer jeweiligen Einheit **6** an einer möglichst hoch gelegenen Stelle der Einheit **6** besonders vorteilhaft ist. Insbesondere ist es von Vorteil, wenn der Abstand **16** größer ist als die Höhe **17,** in der der Schwerpunkt **25** der Einheit oberhalb der Ladefläche **2** des Transportfahrzeugs liegt.

Vorteilhafterweise wird die Ladefläche **2** des Transportfahrzeugs derart genutzt, dass jeweils zwei Einheiten **6** relativ zur Längsachse **3** des Transportfahrzeugs betrachtet nebeneinander auf der Ladefläche **2** positioniert werden. Auf diese Weise können sich die benachbarten Einheiten **6** aneinander abstützen und so eine Leitung horizontaler, zur Querachse **7** des Transportfahrzeugs paralleler Kräfte besonders einfach zwischen seitlichen Wänden **9** des Transportfahrzeugs leiten.

Die Stützelemente **13** erstrecken sich vorteilhafterweise über eine gesamte Länge einer Einheit **6** sodass sie eventuell wirkende horizontale Kräfte möglichst gleichmäßig in die seitlichen Wände **9** des Transportfahrzeugs einleiten können. Dies ist insoweit von Bedeutung, als die seitlichen Wände eines Transportfahrzeugs in aller Regel nicht zur Aufnahme nennenswerter Kräfte geeignet sind, sondern typischerweise lediglich einen räumlichen Abschluss der Ladefläche **2** bilden. Eine verteilte Einleitung insbesondere solcher Kräfte, die senkrecht einer jeweiligen seitlichen Wand **9** orientiert sind, ist daher aus statischer Sicht für die seitliche Wand **9** vorteilhaft.

Um besagte horizontale Kräfte, die parallel zu der Querachse 7 wirken, besser aufzunehmen, ist es besonders vorteilhaft und in dem gezeigten Ausführungsbeispiel ausgeführt, wenn die seitlichen Wände **9** mittels mindestens eines, vorzugsweise mehrerer, Verbindungselemente **15** in Kraft übertragender Weise miteinander verbunden sind. Die Verbindungselemente **15** sind hier in Form von Balken ausgeführt, die jeweils mittels Lagerelementen **29** in zugehörigen Lagerschienen **30** der seitlichen Wände **9** gelagert sind. Diese Verbindungselemente **15** bilden zudem ein vertikales Auflager für die Stützelemente **13.** Letztere können zur Sicherung gegen ein Verrutschen parallel zu der Längsachse **3** des Transportfahrzeugs zusätzlich in Kraft übertragender Weise mit den Verbindungselementen **15** verbunden und somit an diesen fixiert werden.

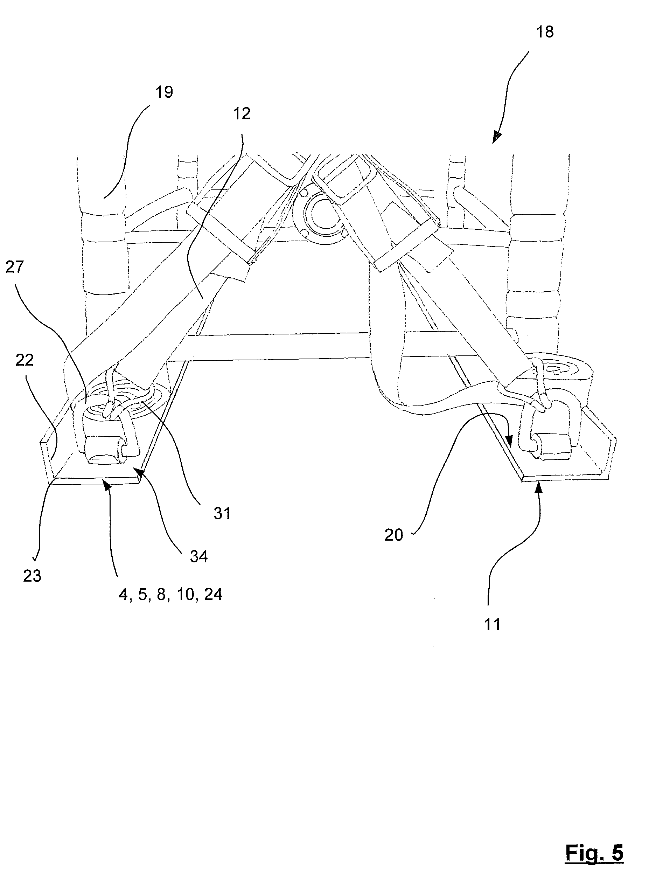

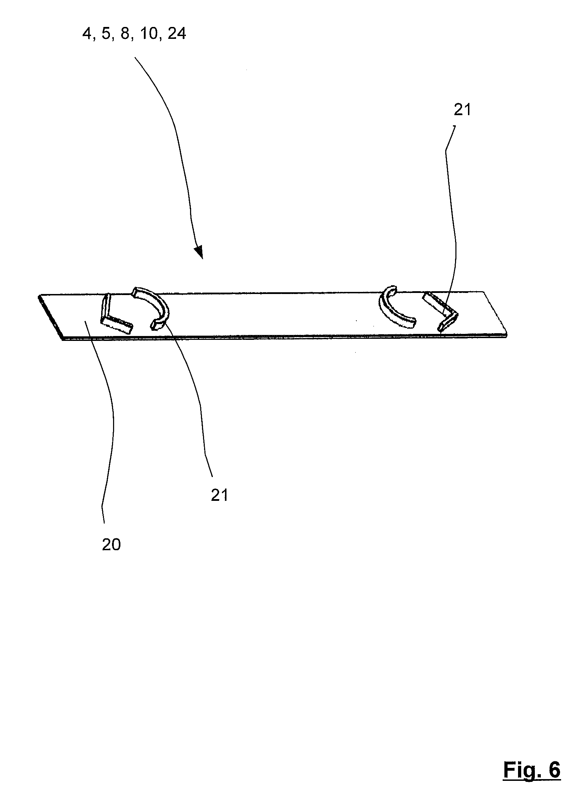

Die Schienen **24** der Sicherungsvorrichtung **4,** die sich im Detail aus den **Figuren 5** **und** **6** ergeben, sind hier in Form von L-Profilen ausgeführt. Als solche weisen sie einen seitlichen, senkrecht zu einer Hauptfläche aufstehenden Schenkel **22** auf, der sich an eine seitliche Kante **23** einer jeweiligen Schiene **24** anschließt. Die L-förmige Ausbildung der Schienen ist insoweit besonders vorteilhaft, als ein jeweiliger Schenkel **22** einer Schiene **24** das Widerstandsmoment der Schiene **24** erheblich erhöht, wodurch ein unbeabsichtigtes Verbiegen einer Schiene **24** infolge von Betriebskräften erschwert wird.

An Anschlussstellen **34** weisen die Schienen jeweils eine Anschlussöse **27** auf, die dazu geeignet ist, mit einem Anschlusshaken **31** eines zugehörigen Zugmittels **12** zusammenzuwirken.

Weiterhin umfassen die hier gezeigten Schienen **24** Stoßkanten **21,** die ausgehend von einer Oberseite **20** einer jeweiligen Schiene **24** vertikal aufragen. Die Stoßkanten **21** sind in Aufstandszonen einer Schiene **24** positioniert, in denen die Standbeinen **19** der zu sichernden Container **1** aufstehen werden. Die Stoßkanten **21** dienen dazu, mit den Standbeinen **19** der Container **1** einen Formschluss auszubilden und auf diese Weise eine Bewegung der Container **1** relativ zu den Schienen **24** in einer zu der Ladefläche **2** parallelen Ebene zu unterbinden. Eine unterschiedliche geometrische Ausgestaltung der Stoßkanten **21** kann vor allem dann von Vorteil sein, wenn die Schiene **24** mit unterschiedlichen Containern **1** kompatibel sein soll. Die Nutzung der Schienen **24** als Kopplungsmittel 5 und Antirutschmittel **8** ist somit weitestgehend unabhängig von jeweils zu sichernden Containern. Insbesondere ist ein Abstand zwischen den Schienen **24** frei wählbar, sodass verschiedene Größen von Untergestellen verschiedener Container für die Nutzbarkeit der Schienen **24** keine Einschränkung darstellen.

Bei Verwendung der erfindungsgemäßen Sicherung, das heißt der Bildung einer Einheit aus mehreren Containern, ist es besonders vorteilhaft, diese im Zuge eines Ladens eines Transportfahrzeugs bereits außerhalb des Transportfahrzeugs miteinander zu koppeln. Dieser Vorteil ergibt sich vor allem daraus, dass eine Abspannung oder sonstige Befestigung einer Einheit **6** an seitlichen Wänden **9** des Transportfahrzeugs und/oder an dessen Ladefläche **2** nicht notwendig ist, um die Einheit **6** vorschriftsmäßig gegen Kippen und Rutschen zu sichern. Das heißt, dass eine Anbringung von Sicherungsmitteln auf dem Transportfahrzeug im Wesentlichen entfällt. Hieraus ergibt sich der Vorteil, dass die Einheiten bereits vor deren Verladung auf die Ladefläche **2** gebildet werden können und sodann lediglich mittels einer geeigneten Transporteinrichtung auf die Ladefläche **2** gehoben werden müssen.

Dabei versteht es sich, dass die Anzahl von Ladevorgängen soweit reduziert werden kann wie Container in einer Einheit zusammengefasst sind. In dem hier gezeigten Beispiel von **2** Containern **1** pro Einheit **6** bedeutet das, dass ein beladen der Ladefläche **2** eines Transportfahrzeugs lediglich halb so viele Ladevorgänge benötigt, wie bei einer Ladung des Transportfahrzeugs mit einzelnen Containern **1.** Dabei ist es besonders von Vorteil, wenn jede Einheit **6** derart auf der Ladefläche **2** des Transportfahrzeugs platziert wird, dass die miteinander gekoppelten Container **1** relativ zu der Längsachse **3** des Transportfahrzeugs betrachtet hintereinander angeordnet sind, sodass das Kippen um die Querachse **7** des Transportfahrzeugs direkt unterbunden ist. In der Folge kann es je nach Ausgestaltung lediglich notwendig sein, ein Kippen um die Längsachse **3** zu blockieren.

Die vorstehend beschriebenen vorteilhaften Ausgestaltungen sind grundsätzlich unabhängig voneinander zu sehen und bedingen einander nicht. Kombinationen einzelner Merkmale des hier gezeigten Ausführungsbeispiels sind ohne weiteres denkbar, sofern dies dem Fachmann technisch möglich erscheint.

### Bezugszeichenliste

- 1: Container
- 2: Ladefläche
- 3: Längsachse
- 4: Sicherungsvorrichtung
- 5: Kopplungsmittel
- 6: Einheit
- 7: Querachse
- 8: Antirutschmittel
- 9: Seitliche Wand
- 10: Lagermittel
- 11: Unterseite
- 12: Zugmittel
- 13: Stützelement
- 14: Schwerpunkt (Container)
- 15: Verbindungselement
- 16: Abstand
- 17: Höhe
- 18: Untergestell
- 19: Standbein
- 20: Oberseite
- 21: Stoßkante
- 22: Schenkel
- 23: Kante
- 24: Schiene
- 25: Schwerpunkt (Einheit)
- 26: Kopplungselement
- 27: Anschlussöse
- 28: Umlenkrolle
- 29: Lagerelement
- 30: Lagerschiene
- 31: Anschlusshaken
- 32: Hebelarm
- 33: Kippachse
- 34: Anschlussstelle
- 35: Abstand

## Patentansprüche

1. Transportfahrzeug, insbesondere ein Lastkraftwagen, mit mindestens zwei auf dem Transportfahrzeug befindlichen Containern (1),
das Transportfahrzeug umfassend eine horizontale Ladefläche (2), die sich entlang einer Längsachse (3) des Transportfahrzeugs erstreckt und auf der die Container (1) zumindest mittelbar aufstehen,
wobei die Container (1) mittels mindestens einer Sicherungsvorrichtung (4) auf der Ladefläche (2) gesichert sind, sodass sowohl ein Kippen als auch ein Rutschen der Container (1) relativ zu Ladefläche (2) unterbunden ist,
wobei mindestens zwei Container (1) parallel zu der Längsachse (3) des Transportfahrzeugs betrachtet hintereinander auf der Ladefläche (2) aufgestellt sind,
wobei die Sicherungsvorrichtung (4) mindestens ein Kopplungsmittel (5) umfasst, mittels dessen mindestens zwei hintereinander aufgestellte Container (1) derart gekoppelt sind, dass diese eine Einheit (6) bilden, sodass ein Kippen jedes gekoppelten Containers (1) infolge von Beschleunigungen während einer Fahrt des Transportfahrzeugs zumindest um eine Querachse (7) des Transportfahrzeugs unterbunden ist,
wobei die Sicherungsvorrichtung (4) mindestens ein Antirutschmittel (8) umfasst, mittels dessen die Einheit (6) gegen das Rutschen gesichert ist,
**dadurch gekennzeichnet, dass**
bei Vorliegen der Einheit (6) in einer Sicherungsposition, in der sie mittels der Sicherungsvorrichtung (4) gesichert ist, eine zwischen der Einheit (6) und der Ladefläche (2) des Transportfahrzeugs wirkende Normalkraft einer Gewichtskraft der Einheit (6) entspricht,
wobei die Sicherungsvorrichtung (4) mindestens ein Haftmittel aufweist, das zumindest mittelbar mit der Einheit (6) zusammenwirkt und unmittelbar mit der Ladefläche (2) in Kontakt steht.

2. Transportfahrzeug nach Anspruch 1, **dadurch gekennzeichnet, dass** die Einheit (6) bei Vorliegen in ihrer Sicherungsposition und bei Stillstand des Transportfahrzeugs frei von horizontalen Kräften ist, insbesondere von horizontalen Zugkräften, mittels derer die Einheit (6) in Richtung einer seitlichen Wand (9) des Transportfahrzeugs gezogen wird.

3. Transportfahrzeug nach Anspruch 1 oder 2, **dadurch gekennzeichnet, dass** das Antirutschmittel (8) von mindestens einem Lagerelement (10), insbesondere von zwei lang gestreckten Schienen (24), gebildet ist, auf dem mindestens zwei Container (1) einer Einheit (6) zumindest mittelbar aufstehen und das auf der Ladefläche (2) des Transportfahrzeugs aufliegt, wobei eine der Ladefläche (2) zugewandte Unterseite (11) des Lagerelements (10) das Haftmittel aufweist.

4. Transportfahrzeug nach einem der Ansprüche 1 bis 3 oder nach Anspruch 1 und 3, **dadurch gekennzeichnet, dass** das mindestens eine Lagerelement (10) sowohl das Antirutschmittel (8) als auch das Kopplungsmittel (5) bildet.

5. Transportfahrzeug nach Anspruch 4, **dadurch gekennzeichnet, dass** die mittels des Lagerelements (10) gekoppelten Container (1) jeweils mit dem Lagerelement (10) in Kraft übertragender Weise verbunden, insbesondere jeweils mittels mindestens eines Zugmittels (12) gegen das Lagerelement (10) verzurrt, sind.

6. Transportfahrzeug nach einem der Ansprüche 1 bis 5, **dadurch gekennzeichnet, dass** die Sicherungsvorrichtung (4) mindestens ein Stützelement (13) umfasst, mittels dessen zumindest miteinander gekoppelte Container (1) mittelbar und/oder unmittelbar gegen seitliche Wände (9) des Transportfahrzeugs abstützbar sind, sodass ein Kippen der Container (1) infolge von Beschleunigungen während der Fahrt des Transportfahrzeugs um die Längsachse (3) des Transportfahrzeugs unterbunden ist.

7. Transportfahrzeug nach Anspruch 6, **dadurch gekennzeichnet, dass** das mindestens eine Stützelement (13) oberhalb von Schwerpunkten (14) der Container (1) angeordnet ist und vorzugsweise bei Vorliegen der Einheit (6) in ihrer Sicherungsposition zumindest zeitweise eine unmittelbare Verbindung zwischen mindestens einem Container (1) und einer seitlichen Wand (9) des Transportfahrzeugs herstellt, wobei sich das Stützelement (13) weiter vorzugsweise parallel zu der Längsachse (3) des Transportfahrzeugs erstreckt.

8. Transportfahrzeug nach einem der Ansprüche 1 bis 7, **gekennzeichnet durch** mindestens zwei parallel zu der Querachse (7) des Transportfahrzeugs verlaufende Verbindungselemente (15), die sich zwischen den seitlichen Wänden (9) des Transportfahrzeugs erstrecken und in Längsrichtung des Transportfahrzeugs betrachtet hintereinander sowie in einem zu der Ladefläche (2) senkrecht gemessenen Abstand (16) von der Ladefläche (2) angeordnet sind, wobei der Abstand (16) vorzugsweise mindestens einer Höhe (17) der Schwerpunkte (14) der Container (1) oberhalb der Ladefläche (2) entspricht, wobei die Verbindungselemente (15) in Kraft übertragender Weise an die seitlichen Wände (9) angeschlossen sind.

9. Transportfahrzeug nach den Ansprüchen 7 und 8, **dadurch gekennzeichnet, dass** das Stützelement (13) auf mindestens zwei benachbarten Verbindungselementen (15) aufliegt.

10. Transportfahrzeug nach einem der Ansprüche 1 bis 9, wobei die Container (1) jeweils ein Untergestell (18) aufweisen, das mindestens vier Standbeine (19) umfasst, **dadurch gekennzeichnet, dass** die Sicherungsvorrichtung (4) mindestens zwei parallel zueinander angeordnete Lagerelemente (10) umfasst, die jeweils in Form lang gestreckter, auf der Ladefläche (2) aufliegender Schienen (24) ausgebildet sind, sodass hintereinander stehende Container (1) jeweils mit mindestens zwei Standbeinen (19) auf einer der beiden Schienen (24) aufstehen, wobei der Ladefläche (2) zugewandte Unterseiten (11) der Schienen (24) jeweils das Haftmittel aufweisen.

11. Transportfahrzeug nach Anspruch 10, **dadurch gekennzeichnet, dass** zumindest bei Vorliegen der Einheit (6) in ihrer Sicherungsposition die Schienen (24) parallel zu der Längsachse (3) des Transportfahrzeugs ausgerichtet sind.

12. Transportfahrzeug nach Anspruch 10 oder 11, **dadurch gekennzeichnet, dass** die Container (1) jeweils in Kraft übertragender Weise mit den Schienen (24) verbunden sind, insbesondere mittels Zugmitteln (12) gegen die Schienen (24) verzurrt sind, sodass die Container (1) mittels der Schienen (24) miteinander gekoppelt sind.

13. Transportfahrzeug nach einem der Ansprüche 10 bis 12, **dadurch gekennzeichnet, dass** die Schienen (24) jeweils auf einer von der Ladefläche (2) abgewandten Oberseite (20) mindestens eine senkrecht zu der Oberseite (20) aufragende Stoßkante (21) aufweisen, die dazu geeignet ist, mit mindestens einem Standbein (19) eines Containers (1) einen Formschluss auszubilden, sodass eine Bewegung des Standbeins (19) relativ zu der jeweiligen Schiene (24) in einer zu der Ladefläche (2) parallelen Ebene blockiert ist.

14. Verfahren zum Verladen von Containern (1) auf eine Ladefläche (2) eines Transportfahrzeugs, umfassend die folgenden Verfahrensschritte:
- Die Container (1) werden auf der Ladefläche (2) positioniert.
- Die Container (1) werden mittels mindestens einer Sicherungsvorrichtung (4) sowohl gegen ein Kippen als auch gegen Rutschen relativ zu der Ladefläche (2) gesichert.
- Mindestens zwei Container (1) werden mittels der Sicherungsvorrichtung (4) zu einer Einheit (6) gekoppelt,
**gekennzeichnet durch** den folgenden Verfahrenschritt:
- Mindestens zwei Container (1) werden bereits außerhalb des Transportfahrzeugs zu der Einheit (6) gekoppelt und erst anschließend auf der Ladefläche (2) positioniert.

15. Verfahren nach Anspruch 14, **dadurch gekennzeichnet, dass** die Einheit (6) derart auf der Ladefläche (2) positioniert wird, dass die miteinander gekoppelten Container (1) in Richtung einer Längsachse (3) des Transportfahrzeugs betrachtet hintereinander stehen, wobei die Koppelung der Container (1) zu der Einheit (6) außerhalb des Transportfahrzeugs derart erfolgt, dass eine Sicherung der Einheit (6) nach deren Positionierung auf der Ladefläche (2) nur noch hinsichtlich eines Kippens der Einheit (1) um die Längsachse (3) des Transportfahrzeugs stattfindet, wobei zur Sicherung der Einheit (6) vorzugsweise eine Sicherungsvorrichtung (4) gemäß einem der Ansprüche 1 bis 13 verwendet wird.
